# EUROPEAN PATENT SPECIFICATION

(11) **EP 0 952 546 B1**
(45) Date of publication and mention of the grant of the patent: **02.06.2004**
(21) Application number: 99250091.8
(22) Date of filing: 26.03.1999
(51) Int. Cl.: G06T 3/40, G06T 3/00

(54) **Image color blending processor**
Verarbeitungseinheit zur Farbbildmischung
Processeur pour engendrer une image avec des couleurs mélangées

(30) Priority: 27.03.1998 JP 9817198
(43) Date of publication of application: 27.10.1999
(73) Proprietor: NEC CORPORATION, Tokyo (JP)
(72) Inventor: Yamada, Toru, Minato-ku, Tokyo (JP)
(74) Representative: Patentanwälte Wenzel & Kalkoff

(56) References cited:
- WO-A-94/24815
- US-A- 4 698 682
- US-A- 5 068 665
- US-A- 5 625 764

## Description

### BACKGROUND OF THE INVENTION

The present invention relates to an image color blending processor which in particular implements semitransparent display that two images are superimposed and the back image is able to be seen through the front image, and implements a color blending process of interpolating pixels at the time of the up scale display of images.

### Description of the Related Art

As the semitransparent display of images, the color blending process called α-blending has been well known. The α-blending is a method to make a composite image of two images, and a method which gives a visual sense to viewers like the background image is seen through the superimposing image in the case that one is a superimposing image and the other image is a background image. In the case that the one pixel data of a color image is composed of each digital number of R, G, B indicating the luminance of the pixel, the α blending processes, S[R,G,B]= αF[R,G,B]+(1- α)H[R,G,B].

In this; α is a numerical value meaning the definition of the degree of the transparency and is called an alpha value. F [R, G, B] is the data of each color of one pixel of the superimposing image, H [R, G, B] is the data of each color of one pixel of the background image existing at the same place as the pixel of the superimposing image and S [R, G, B] is the data of each color of the composite pixel. α = 0 means perfect transparency and α = 1 means perfect opacity, therefore, 0 < α < 1.

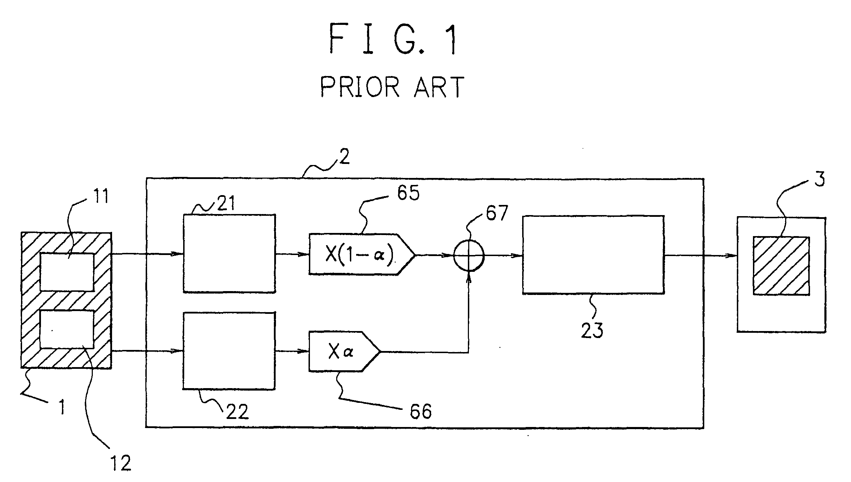

Fig. 1 is a block diagram showing the construction of the process of the α blending. In Fig. 1, a background image 11 outputs the background image and a superimposing image 12 outputs the superimposing image and both images are expressed as the image data memorized in a memory 1. A frame memory 21 is in a data processor 2 and memorizes one frame of the background image which is read from the background image 11 in sequence and a frame memory 22 is in the data processor 2 and memorizes one frame of the superimposing image which is read from the superimposing image 12 in sequence.

Reading from the frame memory 21 and the frame memory 22 and writing to a frame memory for display 23 are implemented by a common address signal.

A superimposing pixel value read from the frame memory 22 is multiplied by the value α at a multiplier 66 and a background pixel value read from the frame memory 21 is multiplied by the value (1 - α) in a multiplier 65 and the outputs from the multipliers 65 and 66 are added in an adder 67 and are inputted to the frame memory for display 23, and the data from the frame memory for display 23 is read and shown on a display 3.

As mentioned above, in the α-blending process, an arbitrary value is able to be selected for the value α showing the degree of transparency, However, a problem arises in that much calculation is needed in the case that in particular the multipliers 65 and 66 are realized by software, because this process is implemented at the time of data transfer to the frame memory, the display speed of the image is influenced by the throughput of the display and there is a problem in that the fully smooth color blending process is not able to be implemented at the case that a real time process such as regenerating the animation is needed.

Standard alpha blending is known, for example, from WO 94/24815. Modifications of the interpolation scheme are discussed in US-A-5 625 764. The latter system also allows for the selection of either input image A or B. When blending A and B a weighted average is performed.

The Japanese Patent Application Laid-Open No. SHO 61-159690 discloses the method that the α blending is not applied for the pixel values of the superimposing image and background image, and the pixels of the superimposing image are thinned out at a certain ratio and superimposed to the background image and the semitransparent display is implemented artificially. However, by simply thinning out the pixels of the superimposing image, for example, in the case that a horizontal line having a width of one pixel exists in the image, a problem arises in that this horizontal line is not displayed or displayed as a coarse dotted line even if this horizontal line is displayed.

This kind of color blending process is applied not only for the semitransparent display of the superimposing image but also for the up-scale of images. As an example, the case that an image is up-scaled twice in the vertical direction is explained, in this case, there is a method that the same data is displayed simply in two lines. However, the natural feeling of the image is lost, therefore an interpolating process is implemented.

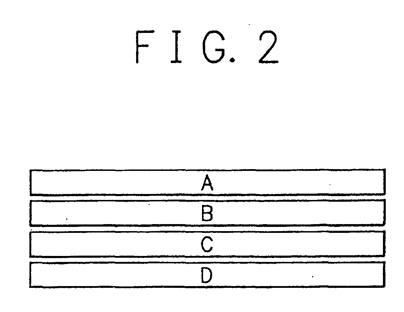

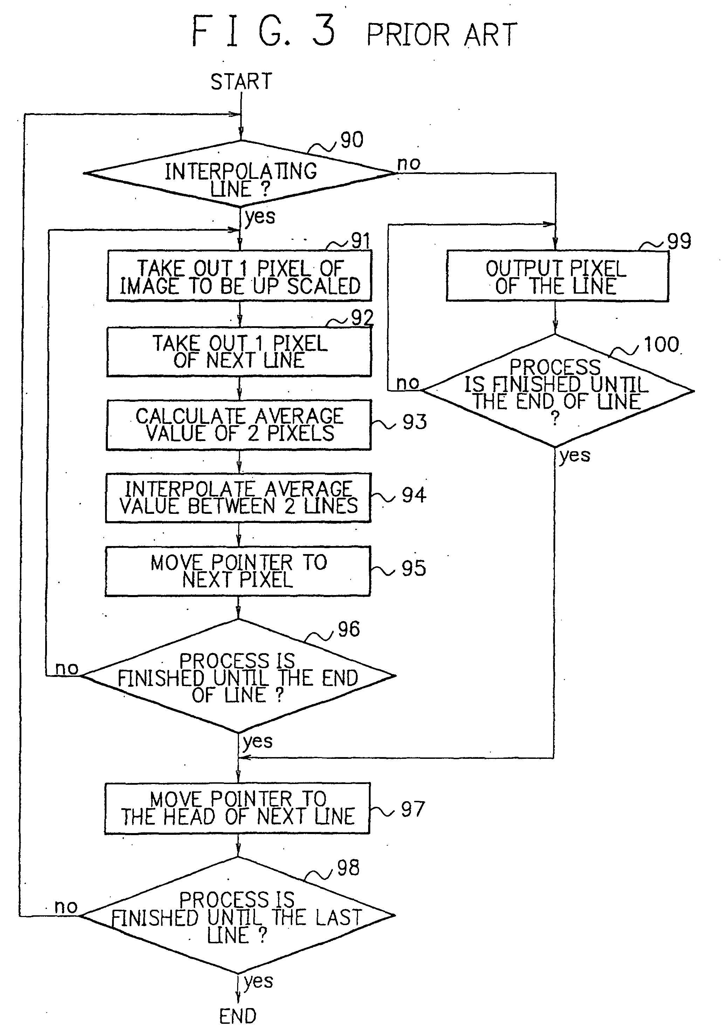

Fig. 2 is a diagram showing a part of a frame memory for the image data to be up scaled in the vertical direction. In Fig. 2, A, B, C and D are shown as each memory of one line. Fig. 3 is a flowchart showing the up scale process of the conventional type. For example, in the case that a line AB is interpolated between a line A and a line B (yes of step 90), the data of one pixel of one line (for example line A) of the image to be up scaled is taken out (step 91). The data of one pixel of next one line (for example line B) is taken out, this pixel is at the same horizontal position as the pixel taken out from the line A (step 92). Then, an average value of the taken out two pixels is calculated (step 93). That is, the α blending is implemented as α = 1/2. This average value is inserted in between lines as a pixel value of the line AB and the interpolation is implemented. This interpolation process is implemented in every two lines and the up-scaled image in the vertical direction is obtained (step 90 and steps 96 to 100).

In this case, a color blending calculation is also needed (step 93), in the above mentioned example, the average value is interpolated in every two lines and the twice as large up-scale in vertical direction is implemented, However, in the case of three times as large up-scale, a blending using a suitable α value is needed in order to implement a smooth interpolating process and a problem arises in that a large burden is loaded upon the processor.

### SUMMARY OF THE INVENTION

It is therefore an object of the present invention to provide an image color blending processor which an α blending giving a large burden to process is not needed for and is able to fully implement a color blending at high quality and in real time even in a processor of small throughput.

In order to solve the above mentioned problems, the present invention provides an image color blending processor which utilizes the characteristic of the sense of sight and is able to implement a semitransparent display and an up-scale display at a simple processor.

The invention is defined by the appended claims.

According to a first aspect of the present invention, without needing any multiplication such as the α blending which loads a big burden to the processor, for example with the color blending factor 3 to 1 or 1 to 1 or 1 to 3, an image is able to be superimposed semitransparently at high speed and with ease.

Therefore, according to another aspect of the present invention, without needing the multiplication and averaging processes of the pixel values which is a big burden for the processor, viewers are able to watch that the pixel value changes smoothly like as a linear interpolation, therefore the image is able to be displayed in up scaled without any loss of the natural sense.

### BRIEF DESCRIPTION OF THE DRAWINGS

Further objects and features of the present invention will become more apparent from consideration of the following detailed description taken in conjunction with the accompanying drawings in which:
Fig. 1 is a block diagram showing the construction of the process of the α-blending;
Fig. 2 is a diagram showing a part of a frame memory for the image data to be up-scaled in the vertical direction;
Fig. 3 is a flowchart showing the up-scale process of the conventional type;
Fig. 4 is a block diagram showing a first embodiment of the present invention;
Fig. 5 is a conceptual diagram showing an explanation of the superimposing of adjacent pixels with each other in each display frame at the displaying image on the display;
Fig. 6 is a flowchart showing a selecting process of the pixel value;
Fig. 7 is a conceptual diagram showing an example of the superimposing of image in each display frame of adjacent pixels to the image displayed on the display in Fig. 4;
Fig. 8 is a conceptual diagram showing another example of the superimposing of image in each display frame of adjacent pixel to the image displayed on the display in Fig. 4;
Fig. 9 is a conceptual diagram showing an up-scaled display screen at one timing; and
Fig. 10 is a conceptual diagram showing another up-scaled display screen at one timing.

### DESCRIPTION OF THE PREFERRED EMBODIMENTS

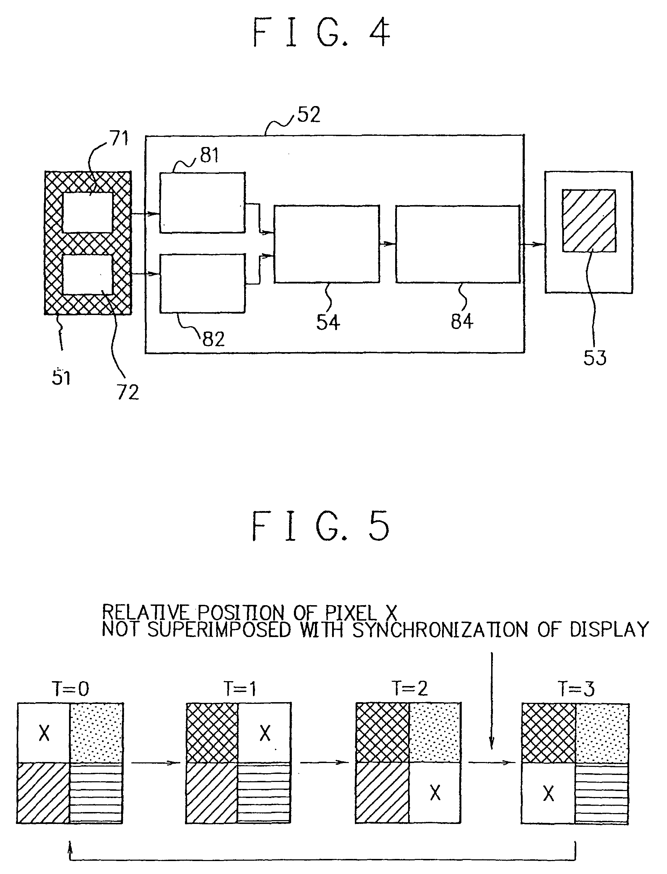

Referring now to the drawings, embodiments of the present invention are explained in detail. Fig. 4 is a block diagram showing a first embodiment of the present invention. In Fig. 4, a data processor 52 is constituted of a frame memory 81 to which a background image 71 is inputted, a frame memory 82 to which a superimposing image 72 is inputted, a display pixel selecting section 54 which selects either pixel value read from the frame memory 81 or pixel value read from the frame memory 82 according to a display synchronizing signal and an address signal to read the frame memory and a display processing section 84 which generates a display signal and displays on a display 53 according to the pixel value selected at the display pixel selecting section 54.

At the α-blending processor in Fig. 1, the background image is multiplied by (1 - α) and the superimposing image is multiplied by α and the multiplied results are added and the added value is written in the frame memory for display 23. However, in the processor of the present invention, either the background pixel or the superimposing pixel is chosen at the display pixel selecting section 54 and the chosen pixel is outputted to the display processing section 84. Therefore, the multiplying calculation at the multipliers 65 and 66 in Fig. 1 is not needed at the processor of the present invention.

The operation of the display pixel selecting section 54 is explained. Fig. 5 is a conceptual diagram showing an explanation of the superimposing of adjacent pixels with each other in each display frame at the displaying image on the display 53, in this case, the explanation is implemented in the non-interlace system. This example shows the semitransparent display superimposed the superimposing image of the frame memory 82 on the background image of the frame memory 81 at the color blending factor 3 to 1.

Referring to Fig. 5, the display pixel selecting section 54 divides the display image which is in the range of the image superimposed into the unit of 2 × 2 pixels and selects the pixel value of the superimposing image read from the frame memory 82 for 3 pixels and the pixel value of the background image read from the frame memory 81 for the rest 1 pixel. In this case, at the inside of the unit of 2 × 2 pixels, the coordinate selected the background pixel is changed sequentially in the circulation in each display frame according to the synchronizing timing (T = 0 to 3) of the display as shown in Fig.5. According to the chosen pixel value, the display signal generated at the display processing section 84 is displayed on the display 53. As explained above, the semitransparent image which is fully naturally color blended in the sense of sight and in the time and space is able to be obtained.

In order to select the pixel value as mentioned above, in the display pixel selecting section 54, for example, a selector which selects output from either the frame memory 81 or the frame memory 82; according to the combination (x, y) of each LSB (least significant bit) of the XY address reading the frame memory is provided, or as a more desirable method a gate which supplies the XY address reading the frame memory to only either one frame memory of the frame memories is provided according to the combination (x, y) of LSB. With this, the selection of the pixel value is able to be easily realized with a small processing load.

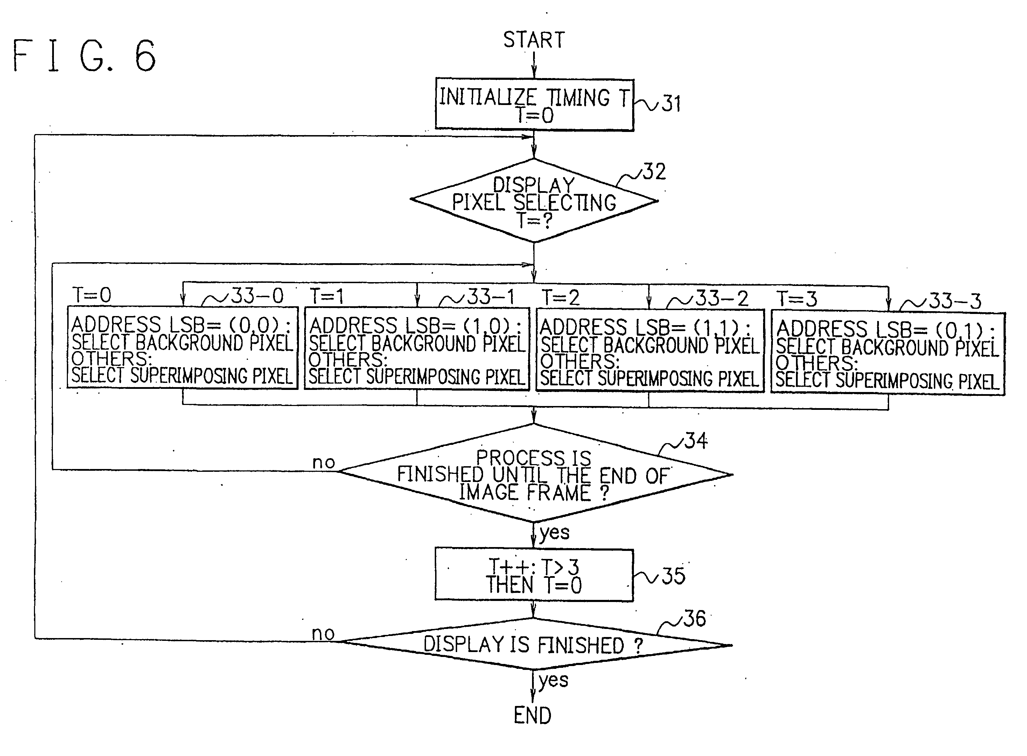

Fig. 6 is a flowchart showing a selecting process of the pixel value. In order to start displaying, a timing T is initialized (step 31). Confirming the timing in each display frame at the display pixel selecting (step 32), in the case only that T = 0 (step 33-0) and the combination of the LSB of the XY address reading the frame memory is (0, 0), the background pixel of the frame memory 81 is selected and the superimposing pixel of the frame memory 82 is selected for the other XY addresses reading the frame memory. As shown above, the image of one frame is processed (step 34), after this, the increment of the timing T is implemented to 0 to 3 in the circulation (step 35). With this operation,
at T = 1, LSB = (1, 0), (step 33-1),
at T = 2, LSB = (1, 1), (step 33-2),
at T = 3, LSB = (0, 1), (step 33-3),
the background pixel of the frame memory 81 is selected as the pixel value of the above address, and the superimposing pixel of the frame memory 82 is selected to the other addresses. With this operation, the semitransparent superimposing is able to be implemented at the color blending factor 3 to 1 for the superimposing image to the background image as shown in Fig.5.

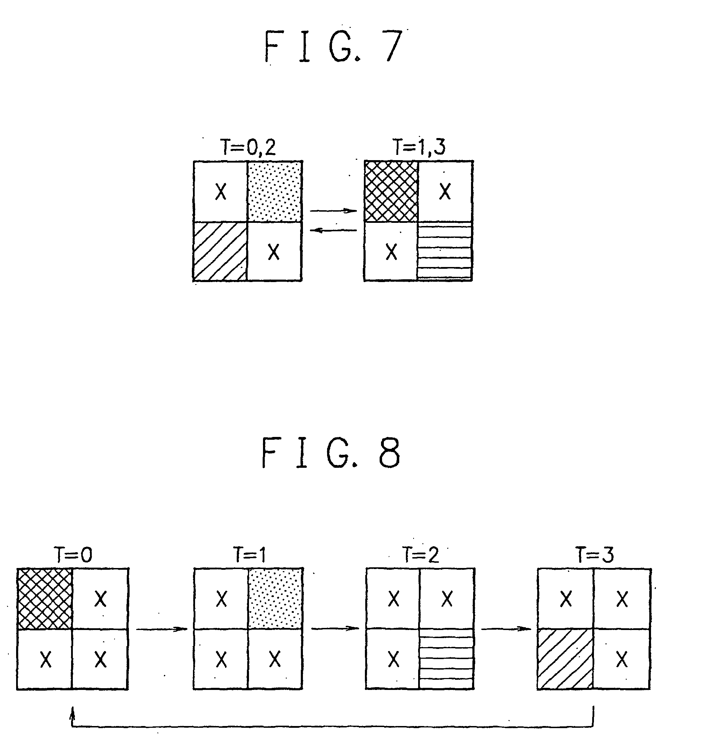

And in the following case,
at T = 0, 2, LSB = (0, 0) and (1, 1),
at T = 1, 3, LSB = (1, 0) and (0, 1),
the background pixel of the frame memory 81 is selected to the above addresses and the semitransparent superimposing is able to be implemented at the color blending factor 1 to 1 for the superimposing image to the background image as shown in Fig. 7.

Moreover, in the following case,
at T = 0, LSB = (1, 0), (1, 1), (0, 1),
at T = 1, LSB = (1, 1), (0, 1), (0, 0),
at T = 2, LSB = (0, 1), (0, 0), (1, 0),
at T = 3, LSB = (0, 0), (1, 0), (1, 1),
the background pixel of the frame memory 81 is selected to the above addresses and the semitransparent superimposing is able to be implemented at the color blending factor 1 to 3 for the superimposing image to the background image as shown in Fig. 8.

Furthermore, for example, at the display pixel selecting section 54, referring to the least two bits of the reading XY address, by selecting some pixel values of 3 × 3 or 4 × 4 in the similar way in the circulation, the semitransparent superimposing is able to be implemented at the color blending factor of 10 ways or 17 ways including 0 % to 100 % respectively.

In the above example, the number of pixels selected from the superimposing image is fixed, however by selecting suitable number of pixels in each timing (display frame), the steps of the color blending factor is able to be further increased.

In the data processor 52 in Fig. 4, the display pixel selecting section 54 selects the display pixel from the frame memory 81 of the background image and the frame memory 82 of the superimposing image according to the reading XY address, however the present invention is not limited to this construction. For example, the display pixel selecting section 54 implements that at the time when the superimposing image 72 is developed to the frame memory 82, only the selecting superimposing image is developed to the frame memory 82 in each timing (display frame) like as mentioned above, and the display processing section 84 is also able to implemented a composite display overwritten the pixel data of the frame memory 82 on the frame memory 81. Further, the plural frame memories corresponding to each timing are provided at the frame memory 82, the display pixel selecting section 54 only develops the superimposing pixel to be selected at each respective timing and the display processing section 84 selects one of the plural frame memories 82 in sequence at each timing (display frame), and is also able to implement a composite display overwritten on the frame memory 81.

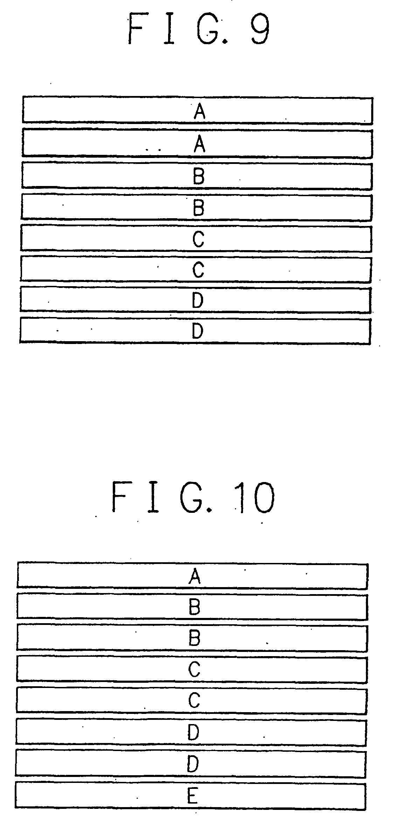

Next, a second embodiment of the image color blending processor of the present invention is explained. For example, in Fig. 4, in the case that the image developed at the frame memory 81 is up-scaled twice as large in the vertical direction and is displayed, the conventional up-scale display processor displays by calculating the linear interpolating value of the pixel value of the lines above and below stayed for the interpolation line of the up-scale display image. However, at the image color blending processor of the present invention, the display pixel selecting section 54 refers to a Y address of the display image and for an even line (interpolating line), for example, at the timing (display frame) T = 0, each pixel value of the line right before is selected and is read from the frame memory 81 and the image shown in Fig. 9 is displayed. And at the timing T = 1, each pixel value of the line right after is selected and is read from the frame memory 81 and the image shown in Fig. 10 is displayed.

With this operation, by circulating the timing 0 and 1 at each display frame, as the same as the first embodiment, the interpolated line which is implemented to the linear interpolation (to be averaged) is able to be smoothly displayed in the sense of sight and in time and space.

In the above explanation, the image is up scaled twice as large in the vertical direction. However, for example in the case that the two interpolation lines each are inserted and the three times up-scaling in the vertical direction is implemented, the timing is circulated in T = 0 to 2 synchronizing with the display frame, expressing the pixel value of the right above line of the interpolating line " above " and the pixel value of the right after line of the interpolating line " below " and the respective interpolating lines are expressed as follows,
at T = 0, above, above,
at T = 1, above, below,
at T = 2, below, below,
with this expression, for the two interpolation lines, without needing the multiplying process like in the α-blending, the interpolating line giving a smooth pixel value which is interpolated the pixel value of the lines above and below with 2 to 1 and 1 to 2 by the linear interpolation is able to be expressed.

In the case that the image is up scaled in the horizontal direction, as the operation mentioned above, the pixel values before and after the X address of the frame memory 81 in each timing (display frame) is interpolated and expressed in the circulation. With this operation, the natural up scaled image is easily obtained. With the combination of the above mentioned embodiments, without needing the multiplying process having a large process burden, the up scaled image in the vertical and horizontal directions is able to be displayed without loosing the natural sense.

As it is clear with the above mentioned explanation, the present invention is able to provide a semitransparent display of images without needing the multiplying process which gives a large burden for the processor and is able to give the effect of the interpolation without needing an interpolating calculation of pixels at the line to be interpolated for the up scale display of images. Therefore according to the present invention, even a relatively small processor is able to implement image processing, such as, a semitransparent superimposing, and an image up-scale at very high speed and in high quality.

While the present invention has been described with reference to the particular illustrative embodiments, it is not to be restricted by those embodiments but only by the appended claims.

## Claims

1. A multiplication-free image color blending processor (52) which displays a display image as a sequence of display frames displayed in timing steps, said display image providing the visual impression of superimposing semitransparently a second original image on a first original image, said processor comprising:
a display processing section (84) which generates said display image signal based on pixel data selected for each display frame by a display pixel selecting section (54),
said display pixel selecting section (54) selecting each displayed superimposing pixel of each display frame either from the first original image or from the second original image, said display pixel selecting section dividing said display image into plural small regions, each constituted of a definite number of pixels adjacent to each other, and selecting for each timing step some pixel values of each small region from said first original image and the other pixel values of each small region from said second original image, said selecting of pixels within each region alternating over a sequence of frames such as to ensure a spatially and temporal uniform visual impression of color blending for the display image.

2. An image color blending processor in accordance with claim 1, wherein:
said small region is constituted of at least 4 adjacent pixels.

3. An image color blending processor in accordance with claim 1, comprising:
a first frame memory developing said first original image,
a second frame memory developing said second original image, and
a timing counter outputting in the circulation a counting value of 0 to 3 with the increment by synchronizing a vertical synchronizing signal of said display image.

4. An image color blending processor in accordance with claim 1, wherein:
said display pixel selecting section selects a pixel data corresponding to either display address of said first frame memory or said second frame memory, according to the combination of the respective LSB least significant bit values, in the case that the X address and Y address of said display addresses are expressed as binary digits, and said counting value, at the superimposing display region.

5. A multiplication-free image color blending processor (52) which displays an original image up-scaled by inserting a definite number of pixels in the vertical direction or horizontal direction, or both the vertical and horizontal directions between the pixels of the original image, said up-scaled image being displayed in timing steps as a sequence of display frames, said processor comprising:
a display processing section (84) which generates said up-scaled display image signal based on pixel data selected for each display frame by a display pixel selecting section (54),
said display pixel selecting section (54) selecting the pixel value of each inserted pixel of each display frame to be equal to the pixel value of one of the pixels of the original image located in the nearest address of the right and left and the above and below of the respective inserted pixel, said selecting for each inserted pixel alternating over a sequence of frames such as to ensure that the sequential display of display frames provides a spatially and temporally uniform visual impression of color blending of nearest original pixels contributing to an inserted pixel in the up-scaled display image.

6. An image color blending processor in accordance with claim 5, wherein:
said up-scaled display image is a twice up-scaled image in the vertical direction which is obtained in that 1 line of pixels is inserted between every 2 lines of the original image data in the vertical direction, and
said display pixel selecting section which selects alternately the pixel data of the inserted line from the pixel data of said original image line displayed at the right above of said inserted line and the right below of said inserted line in each display frame.

## Patentansprüche

1. Prozessor (52) zur multiplikationsfreien Farbbildmischung, der ein Bildschirmbild als Sequenz von in Taktschritten ausgegebenen Bildrahmen darstellt, wobei das Bildschirmbild für den visuellen Eindruck eines semitransparenten Überlagerns eines zweiten Originalbildes über einem ersten Originalbild sorgt und der Prozessor umfaßt:
einen Bildverarbeitungsabschnitt (84), der das Bildschirmbildsignal auf Pixeldaten basierend, die für jeden Bildrahmen durch einen Bildpixelauswahlabschnitt (54) ausgewählt sind, erzeugt,
wobei der Bildpixelauswahlabschnitt (54) jedes dargestellte überlagernde Pixel eines jeden Bildrahmens entweder aus dem ersten Originalbild oder aus dem zweiten Originalbild auswählt, der Bildpixelauswahlabschnitt das Bildschirmbild in eine Mehrzahl kleiner Bereiche aufteilt, von denen jeder aus einer bestimmten Anzahl zueinander benachbarter Pixel gebildet ist, und für jeden Taktschritt einige Pixelwerte jedes kleinen Bereiches aus dem ersten Originalbild und die anderen Pixelwerte jedes kleinen Bereiches aus dem zweiten Originalbild auswählt, und wobei sich das Auswählen von Pixeln innerhalb jeden Bereiches über eine Folge von Rahmen ändert, um einen räumlich und zeitlich einheitlichen visuellen Eindruck einer Farbmischung für das Bildschirmbild sicherzustellen.

2. Prozessor zur Farbbildmischung nach Anspruch 1, bei dem:
der kleine Bereich von wenigstens vier benachbarten Pixeln gebildet ist.

3. Prozessor zur Farbbildmischung nach Anspruch 1, umfassend:
einen ersten Rahmenspeicher, der das erste Originalbild entwickelt,
einen zweiten Rahmenspeicher, der das zweite Originalbild entwickelt, und
einen Taktzähler, der einen Zählwert von 0 bis 3 zirkulierend mit dem Inkrement ausgibt, indem ein vertikales Synchronisierungssignal des Bildschirmbildes synchronisiert wird.

4. Prozessor zur Farbbildmischung nach Anspruch 1, bei dem:
der Bildpixelauswahlabschnitt Pixeldaten auswählt, die irgendeiner Bildadresse des ersten Rahmenspeichers oder des zweiten Rahmenspeichers entsprechen, und zwar gemäß der Kombination der jeweiligen LSB/niedrigstwertigen Bit-Werten, in dem Fall, daß die X-Adresse und die Y-Adresse der Bildadressen als binäre Ziffern ausgedrückt werden, und des Zählwertes am überlagernden Bildbereich.

5. Prozessor zur multiplikationsfreien Farbbildmischung, der ein Originalbild anzeigt, das durch Einfügen einer bestimmten Anzahl Pixel in der vertikalen Richtung oder horizontalen Richtung oder sowohl in der vertikalen als auch horizontalen Richtung zwischen den Pixeln des Originalbilds vergrößert ist, wobei das vergrößerte Bild in Taktschritten als eine Folge von Bildrahmen dargestellt wird, und der Prozessor umfaßt:
einen Bildverarbeitungsabschnitt (84), der das vergrößerte Bildschirmbildsignal auf Pixeldaten basierend, die für jeden Bildrahmen von einem Bildpixelauswahlabschnitt (54) ausgewählt sind, erzeugt,
wobei der Bildpixelauswahlabschnitt (54) den Pixelwert jedes eingefügten Pixels jedes Bildrahmens gleich dem Pixelwert eines der Pixel des Originalbildes, das sich in der nahesten Adresse nach rechts und links sowie nach oben und unten des betreffenden eingefügten Pixels befindet, auswählt, während das Auswählen für jedes eingefügte Pixel sich über eine Sequenz von Rahmen ändert, um sicherzustellen, daß die sequentielle Wiedergabe von Bildrahmen für einen räumlich und zeitlich einheitlichen visuellen Eindruck des Farbmischens der nahesten Originalpixel sorgt, was zu einem eingefügten Pixel in dem vergrößerten, skalenaufwärts gerichteten Bildschirmbild beiträgt.

6. Prozessor zur Farbbildmischung nach Anspruch 5, bei dem:
das vergrößerte Bildschirmbild in vertikaler Richtung ein zweifach vergrößertes Bild ist, das man dadurch erhält, daß in der vertikalen Richtung eine Zeile Pixel zwischen alle zwei Zeilen der Originalbilddaten eingefügt wird und
der Bildpixelauswahlabschnitt wahlweise die Pixeldaten der eingefügten Zeile aus den Pixeldaten der Originalbildzeile, die zur Rechten über der eingefügten Zeile und zur Rechten unter der eingefügten Zeile in jedem Bildrahmen angezeigt wird, auswählt.

## Revendications

1. Processeur (52) pour engendrer sans multiplication une image avec des couleurs mélangées qui affiche une image d'affichage comme une séquence de trames d'affichage affichées selon des étapes temporelles, ladite image d'affichage fournissant l'impression visuelle de superposer de façon semi-transparente une seconde image originale sur une première image originale, ledit processeur comprenant :
une section (84) de traitement d'affichage qui génère ledit signal d'image d'affichage sur la base de données de pixels sélectionnées pour chaque trame d'affichage par une section (54) de sélection de pixel d'affichage,
ladite section (54) de sélection de pixel d'affichage sélectionnant chaque pixel superposé affiché de chaque trame d'affichage soit à partir de la première image originale soit à partir de la seconde image originale, ladite section de sélection de pixel d'affichage divisant ladite image d'affichage en une pluralité de petites régions, chacune constituée d'un certain nombre défini de pixels adjacents les uns aux autres, et sélectionnant, pour chaque étape temporelle, certaines valeurs de pixels de chaque petite région à partir de ladite première image originale et les autres valeurs de pixels de chaque petite région à partir de la seconde image originale, ladite sélection de pixels dans chaque région étant alternée sur une séquence de trames de façon à assurer spatialement et temporellement une impression visuelle uniforme de mélange de couleurs pour l'image d'affichage.

2. Processeur pour engendrer une image avec des couleurs mélangées selon la revendication 1, dans lequel :
ladite petite région est constituée d'au moins 4 pixels adjacents.

3. Processeur pour engendrer une image avec des couleurs mélangées selon la revendication 1, comprenant :
une première mémoire de trame développant ladite première image originale;
une seconde mémoire de trame développant ladite seconde image originale; et
un compteur de temps délivrant dans la circulation une valeur de comptage comprise entre 0 et 3 avec l'incrément en synchronisant un signal de synchronisation vertical de ladite image d'affichage.

4. Processeur pour engendrer une image avec des couleurs mélangées selon la revendication 1, dans lequel :
ladite section de sélection de pixels d'affichage sélectionne des données de pixels correspondant à une adresse d'affichage soit de ladite première mémoire de trame soit de ladite seconde mémoire de trame, en fonction de la combinaison des valeurs des respectifs LSB bits de poids les plus faibles, dans le cas où l'adresse X et l'adresse Y desdites adresses d'affichage sont exprimées en tant que valeurs binaires, et ladite valeur de comptage, au niveau de la région d'affichage superposé.

5. Processeur (52) pour engendrer sans multiplication une image avec des couleurs mélangées qui affiche une image originale agrandie en insérant un certain nombre défini de pixels suivant la direction verticale ou suivant la direction horizontale, ou à la fois suivant les directions verticale et horizontale entre les pixels de l'image originale, ladite image agrandie étant affichée selon des étapes temporelles selon une séquence de trames d'affichage, ledit processeur comprenant :
une section (84) de traitement d'affichage qui génère ledit signal d'image d'affichage agrandie sur la base de données de pixels sélectionnées pour chaque trame d'affichage par une section (54) de sélection de pixels d'affichage;
ladite section (54) de sélection de pixels d'affichage (54) sélectionnant la valeur de pixel de chaque pixel inséré de chaque trame d'affichage pour être égale à la valeur de pixel d'un des pixels de l'image d'origine située dans l'adresse la plus près du pixel respectif inséré à gauche et à droite et au-dessus et au-dessous, ladite sélection pour chaque pixel inséré étant alternée sur une séquence de trames, de façon à assurer que l'affichage séquentiel des trames d'affichage assure spatialement et temporellement une impression visuelle uniforme de mélange de couleurs des plus proches pixels d'origine contribuant à un pixel inséré dans l'image d'affichage agrandie.

6. Processeur pour engendrer une image avec des couleurs mélangées selon la revendication 5, dans lequel :
ladite image d'affichage agrandie est une image agrandie 2 fois suivant la direction verticale qui est obtenue en insérant dans une ligne de pixels entre 2 lignes des données d'image d'origine suivant la direction verticale, et
ladite section de sélection de pixel d'affichage qui sélectionne de manière alternative les données de pixels de la ligne insérée à partir des données de pixels de ladite ligne d'image d'origine affichées juste au-dessus de ladite ligne insérée et juste au-dessous de ladite ligne insérée dans chaque trame d'affichage.
